Europäisches Patentamt

European Patent Office

Office européen des brevets

(19)

(11) Veröffentlichungsnummer : **0 081 615**
**B1**

# (12) EUROPÄISCHE PATENTSCHRIFT

(45) Veröffentlichungstag der Patentschrift :
26.03.86

(21) Anmeldenummer : 81710056.3

(22) Anmeldetag : 15.12.81

(51) Int. Cl.⁴ : **B 23 K 11/20**

(54) **Verfahren zur Herstellung einer Schweissverbindung sowie Zwischenteil zu dessen Durchführung.**

(43) Veröffentlichungstag der Anmeldung :
**22.06.83 Patentblatt 83/25**

(45) Bekanntmachung des Hinweises auf die Patenterteilung : **26.03.86 Patentblatt 86/13**

(84) Benannte Vertragsstaaten :
**AT BE CH FR GB IT LI NL SE**

(56) Entgegenhaltungen :
**FR-A- 2 179 680**
**FR-A- 2 303 941**
**US-A- 3 664 816**
**US-A- 4 136 603**
**WELDING JOURNAL, Band 48, Nr. 2, Februar 1969, Seiten 95-101, Miami, USA F.R. BAYSINGER: "Insert Pieces"**

(73) Patentinhaber : **SCHWEIZERISCHE ALUMINIUM AG**

**CH-3965 Chippis (CH)**

(72) Erfinder : **Wagner, Alfred**
**Im Stäudler 12**
**D-7705 Steisslingen (DE)**
Erfinder : **Ames, Adolf**
**Oberdorfstrasse 7**
**D-7701 Hilzingen 2 (DE)**
Erfinder : **Hodel, Ulf, Dipl.-Ing.**
**Hermann-Hesse-Strasse 11**
**D-7707 Engen (DE)**

(74) Vertreter : **Hiebsch, Gerhard F., Dipl.-Ing.**
**Erzbergerstrasse 5A Postfach 464**
**D-7700 Singen 1 (DE)**

**Beschreibung**

Die Erfindung betrifft ein Verfahren zur Herstellung einer Schweißverbindung zwischen einem Leichtmetallteil und einem Schwermetallteil unter Verwendung eines Zwischenteiles mit Komponenten aus dem Leichtmetall entsprechendem Metall und dem Schwermetall entsprechendem Werkstoff.

Bei Vorrichtungen aus Leichtmetall einerseits und Schwermetallpartnern andererseits entstehen erhebliche Probleme dadurch, daß Schweißverbindungen zwischen diesen Teilen nicht oder nur unter großem Aufwand hergestellt zu werden vermögen. Aus diesem Grunde ist man dazu übergegangen, beispielsweise Stahlträger und Aluminiumplatten dort miteinander zu verschrauben, wo sich eine Verbindung der beiden Werkteile nicht umgehen läßt.

Vor allen Dingen hat sich als nachteilig beim Schiffsbau erwiesen, da sich Leichtmetallaufbauten nicht dicht mit dem Stahlgerüst des Schiffsrumpfes verbinden lassen ; Schraubverbindungen können hier auch dann nicht die optimale Lösung darstellen, wenn besondere Dichtungselemente gegen eindringendes Seewasser zwischengeschaltet werden.

Aus dem « Welding Journal », Februar 1969, S. 95-101, ist ein Verfahren der eingangs genannten Art bekannt, mit dem beispielsweise Aluminiumteile und Stahlplatten dadurch verschweißt werden können, daß man mehrschichtige Platten zwischen die genannten Partner aus unterschiedlichen Metallen einfügt und anschweißt. Dieses Verfahren ist auf die Verwendung plattenförmiger Zwischenteile beschränkt. Diese aber schränken die Anwendungsmöglichkeiten erheblich ein.

Die DE-OS-2 207 448 beschreibt ein Verfahren, mittels dessen eine Aluminiumplatte am Boden eines Gefäßes aus rostfreiem Stahl dadurch festgelegt wird, daß eine Einlage aus einer Aluminiumfolie einer Stärke von 0,02 bis 0,1 mm zwischen die untere Außenfläche des Gefäßbodens aus rostfreiem Stahl und die Oberfläche der die Sohle bildenden Platte eingefügt und durch Diffusionsschweißen verbunden wird. Ein derartiges Verfahren ist nur auf Gegenstände geringer Größenordnung anwendbar. Darüber hinaus bleibt es auf bestimmte Formen beschränkt.

Angesichts dieser Gegebenheiten hat sich der Erfinder das Ziel gesetzt, eine Schweißverbindung von Leichtmetallteilen einerseits und Schwermetallteilen andererseits zu schaffen, welche es erlaubt, insbesondere Metallplatten auch unterschiedlicher Stärke miteinander in beliebiger Konfiguration zu verbinden.

Zur Lösung dieser Aufgabe führt, daß die Komponenten aus dem Leichtmetall entsprechendem Metall und dem Schwermetall entsprechendem Werkstoff auf dem Wege des Strangpressens metallisch verbunden sind und die entsprechenden Flächen des Zwischenteiles mit den zu verbindenden Teilen in Kontakt gebracht und verschweißt werden.

Die beiden metallisch verbundenen Werkstoffkomponenten werden mit jeweils entsprechenden Werkstoffen — diese verbindend — schmelzverschweißt, wobei erfindungsgemäß eine Oberfläche des Zwischenteils neben der eine Auflage bildenden, dem Schwermetall entsprechenden Werkstoffkomponente eine Auflagefläche für den Leichtmetallteil aufweist.

Dabei ist das Verbundprofil bevorzugt rechteckigen Querschnittes mit in einem Querschnittseck angeordneten Profilband, dessen freie Oberfläche mit der benachbarten Anlagefläche für den Leichtmetallkörper fluchtet oder dazu im Abstand parallel verläuft, also schulterartig abgesetzt ist. Die letztgenannte Ausführungsform dient zur Verbindung von Blechen unterschiedlicher Dicke ; beide beschriebenen Profile erlauben das Aneinanderfügen von Blechen od. dgl. derart, daß deren nach außen gerichtete Oberflächen miteinander fluchten. Die beiden Bleche od. dgl. unterschiedlichen Werkstoffes sind mit ihren Komponenten durch Punktschweißen verbunden. Bei solchen Vorrichtungen treten keine Scherwirkungen auf. Die Sicherheit bei der Koppelung beider Metalle ist unverhältnismäßig hoch.

Im Rahmen der Erfindung liegt auch ein Verbundprofil mit Winkelquerschnitt und an wenigstens einem Schwenkel vorgesehenem Profilband als Schenkeloberfläche. Dank dieser Maßgaben können die Bleche od. dgl. unterschiedlichen Werkstoffes — in Abhängigkeit vom Winkel des Winkelquerschnittes — rechtwinkelig oder geneigt zueinander festgelegt werden. Wird beispielsweise ein Schenkel beidseits mit Profilband versehen, können auch Aufbauten mit zwei in Abstand zueinander angebrachten Leichtmetallblechen hergestellt werden, wobei der Abstandhalter gleichzeitig Befestigungselement am Stahlboden ist. Verwandt mit diesen erfindungsgemäßen Verbundprofilen mit Winkelquerschnitt sind D-förmige Verbundprofile, deren einer Balken das Profilband/die Profilbänder trägt.

Als günstig hat es sich erwiesen, wenigstens einen Schenkel des Winkelquerschnittes zu krümmen und damit beispielsweise in sich gekrümmte Seitenbleche von Automobilen am Stahlboden festzulegen.

Insgesamt wird durch die erfindungsgemäße Ausgestaltung der Verbundprofile auf sehr einfache Weise der eingangs erwähnte Gegenstand hergestellt. Soweit die Begriffe Leichtmetalle und Schwermetalle einander gegenübergestellt sind, werden unter Schwermetallen alle Metalle verstanden, welche nicht zur Gruppe der Leichtmetalle gehören.

Weitere Vorteile der Erfindung ergeben sich aus der nachfolgenden Beschreibung bevorzugter Ausführungsbeispiele sowie anhand der Zeichnung ; diese zeigt in

Figur 1 einen Querschnitt durch ein Werkzeug zum Strangpressen von Verbundprofilen ;

Figur 2 einen vergrößerten Schnitt durch eine Vorrichtung mit einem Verbundprofil;

Figur 3 eine der Fig. 2 entsprechende Darstellung durch ein weiteres Ausführungsbeispiel;

Figur 4 den Querschnitt durch eine Vorrichtung mit Winkelprofil;

Figur 5 einen Teilquerschnitt durch eine weitere Ausführungsform.

Ein zylindrisches Werkzeug R zum Pressen von Verbundprofilen weist an einem Matrizenhalter 1 einen in dessen Ringwulst 2 eingeführten Matrizeneinsatz 3 auf.

Im Zentrum einer Einlauffläche 4 des Matrizenhalters 1 ist eine — im Ausführungsbeispiel grundrißlich rechteckige — Einlaufkammer 5 zu erkennen, welche sich in Preßrichtung × bzw. entlang der Werkzeugachse M unter Bildung einer geneigten Gleitfläche 6 verjüngt. An letztere schließt ein ebenfalls rechteckiger Einlaufrahmen 7 an. Die dem Matrizeneinsatz 3 benachbarte Stirnfläche 8 des Matrizenhalters 1 erzeugt innerhalb jenes Ringwulstes 2 einen flachen Kegel mit in die Werkzeugachse M und den Einlaufrahmen 7 fallender Konstruktionsspitze.

Der Stirnfläche 8 des Matrizenhalters 1 liegt eine entsprechend eingeformte Kegelfläche 9 des Matrizeneinsatzes 3 an, in dessen Zentrum ein den Einsatzrahmen 7 — mit diesem gegenüber engerem formgebendem Querschnitt — fortsetzender Matrizendurchbruch 10 der Höhe h angeordnet ist. Dieser geht in einen sich zur Werkzeugkopfseite 11 trichterähnlich erweiternden Auslaufkanal 12 über.

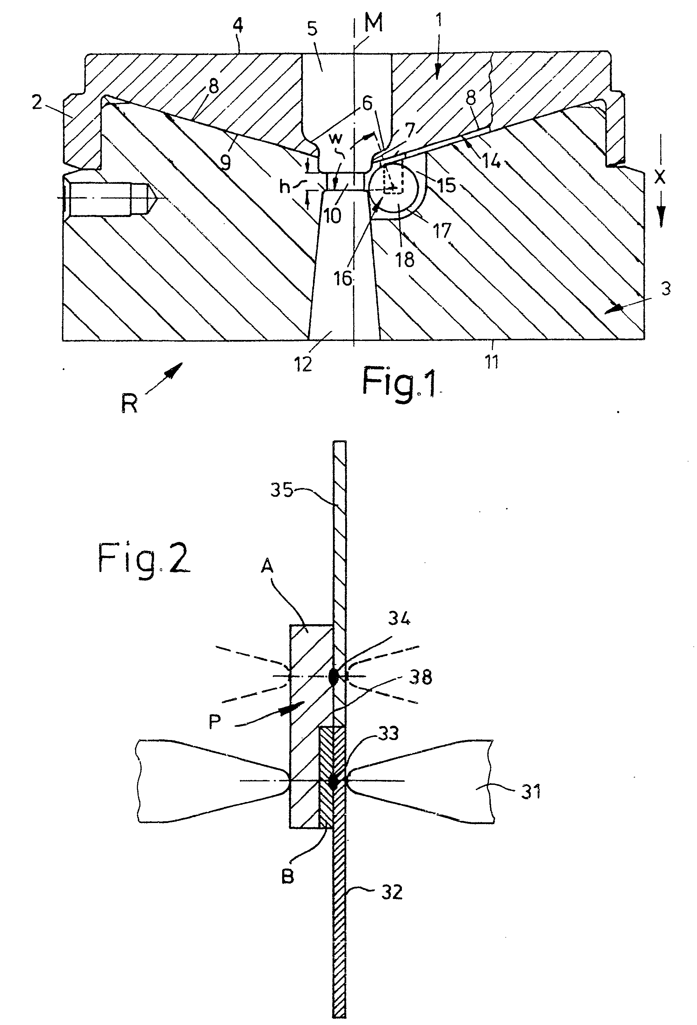

In die Kegelfläche 9 des Matrizeneinsatzes 3 sind auf einem gemeinsamen Werkzeugdurchmesser zwei flache Nuten eingeformt, die zusammen mit der sie überspannenden Stirnfläche 8 des Matrizenhalters 1 Führungskanäle 14 für während des Preßvorgangs dem Matrizendurchbruch 10 radial zuzuführende Profilbänder B (Fig. 2 bis 5) ergeben.

An den Übergängen zwischen den Kanälen 14 und dem Matrizendurchbruch 10 sind in Ausnehmungen 15 Räder 16 angebracht, deren Umfangswandung 17 jene Profilbänder B während ihres Transportes durch das Werkzeug R im Bereiche eines Umschlingungswinkels w aufliegen.

Die Breite des Profilbandes B ist größer als deren achsparallele Länge, so daß das Profilband B die Stirnfläche 18 des Rades 16 beidseits überragt und im Bereich des Matrizendurchbruches 10 die Ausnehmung 15 für das Rad 16 überdeckt.

Bei einem im Matrizendurchbruch 10 des Werkzeuges R während des Strangpressens entstehenden Verbundprofil P liegen eine Leichtmetall-Matrix A sowie das Profilband B aus unplattiertem Bandstahl aneinander und haften durch metallischen Verbund.

Mit dem Werkzeug R werden sogenannte Schweißkupplungsprofile P besonders günstig hergestellt. So zeigt Fig. 2 ein Verbundprofil P rechteckigen Querschnitts, dessen Bandkomponente B in einem Querschnittseck untergebracht und an die mit Hilfe einer Schweißzange 31 ein Stahlblech 32 bei 33 durch Punktschweißen angeschlossen ist. Das an die Anlagefläche 38 der Aluminiumkomponente A bei 34 angeschweißte Aluminiumblech 35 fluchtet mit dem Stahlblech 32.

Ist das Aluminiumblech 35 dicker als das Stahlblech 32, wird ein Verbundprofil $P_1$ verwendet, dessen Bandkomponente B die benachbarte Oberfläche 36 der Aluminiumkomponente A um den Differenzbetrag der Blechdicken überragt.

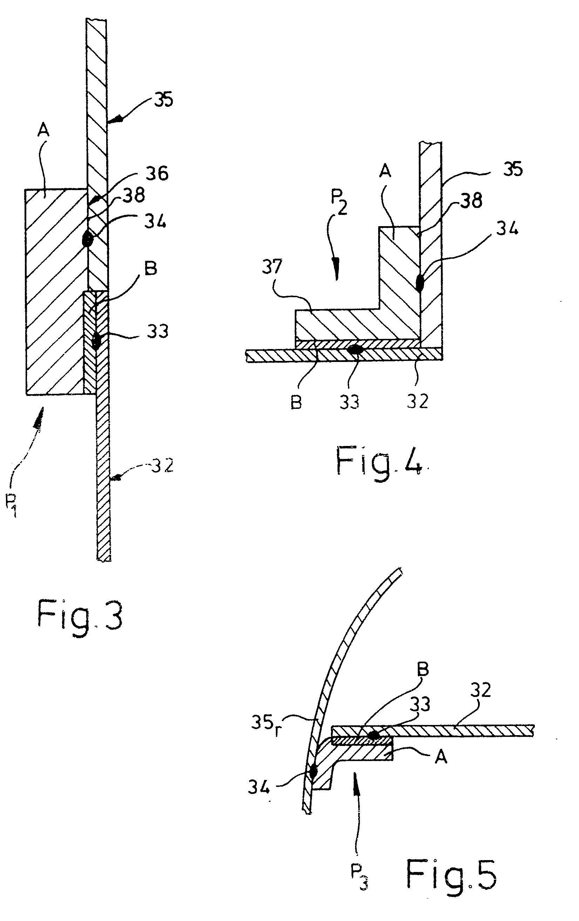

Das Winkelprofil $P_2$ der Fig. 4 mit an einem Schenkel 37 vorgesehenem Stahlband B dient zum Verbinden zueinander winkelig stehender Bleche 32, 35, wohingegen das querschnittlich gekrümmte Verbundprofil $P_3$ nach Fig. 5 einen Stahlboden 32 eines nicht weiter dargestellten Fahrzeuges mit einer gebogenen Seitenwand 35, aus Aluminiumblech verbindet.

**Patentansprüche**

1. Verfahren zur Herstellung einer Schweißverbindung zwischen einem Leichtmetallteil (35) und einem Schwermetallteil (32) unter Verwendung eines Zwischenteiles (P, $P_1$, $P_2$, $P_3$) mit einer Komponente (A) aus dem Leichtmetall entsprechendem Metall, das mit einer dem Schwermetall entsprechenden Werkstoffkomponente (B) auf dem Wege des Strangpressens metallisch verbunden ist, wobei die entsprechenden Flächen des Zwischenteiles (P, $P_1$, $P_2$, $P_3$) mit den zu verbindenden Teilen (32, 35) in Kontakt gebracht und verschweißt werden.

2. Zwischenteil zur Durchführung des Verfahrens nach Anspruch 1, dadurch gekennzeichnet, daß eine seiner Oberflächen neben der eine Auflage bildenden, dem Schwermetall entsprechenden Werkstoffkomponente (B) eine Auflagefläche für den Leichtmetallteil (35) aufweist, wobei die Verbindung der Komponenten auf dem Wege des Strangpressens hergestellt ist.

3. Zwischenteil nach Anspruch 2, dadurch gekennzeichnet, daß es einen rechteckigen Querschnitt mit in einem Querschnittseck angeordnetem Profilband aufweist, das der dem Schwermetall entsprechenden Werkstoffkomponente (B), entspricht, wobei die freie Oberfläche des Profilbandes mit der benachbarten Oberfläche (38) der Leichtmetallkomponente (A) fluchtet oder dazu im Abstand parallel verläuft (Fig. 2, 3).

4. Zwischenteil zur Durchführung des Verfahrens nach Anspruch 1, dadurch gekennzeichnet, daß es einen Winkelquerschnitt aufweist und wenigstens einer der Schenkel (37) an einer Fläche mit der als Profilband ausgebildeten, dem Schwermetall entsprechenden Werkstoffkomponente (B) versehen ist (Fig. 4, 5), wobei die Verbindung der Komponenten auf dem Wege des Strangpressens hergestellt ist.

5. Zwischenteil nach Anspruch 4, dadurch gekennzeichnet, daß der eine Schenkel (37) des Winkelprofils an seiner Außenfläche mit dem Profilband (B) versehen ist.

6. Zwischenteil nach Anspruch 4 oder 5, dadurch gekennzeichnet, daß wenigstens ein Schenkel des Winkelprofils (P₃) gekrümmt ist.

## Claims

1. A method of production of a welded connection between a lightmetal part (35) and a heavy-metal part (32) by the employment of an intermediate part (P, P₁, P₂, P₃) having one component (A) of metal corresponding with the light metal, which by way of extrusion is connected metallically to a material component (B) corresponding with the heavy metal, the corresponding areas of the intermediate part (P, P₁, P₂, P₃) being brought into contact with the parts (32, 35) which are to be connected, and welded.

2. An intermediate part for the performance of the method as in Claim 1, characterized in that one of its surfaces next to the material component (B) forming a bearing and corresponding with the heavy metal exhibits a bearing area for the light metal part (35), the connection of the components being produced by way of extrusion.

3. An intermediate part as in Claim 2, characterized in that it exhibits a rectangular cross-section having a profiled strip arranged in one corner of the cross-section, which corresponds with the material component (B) corresponding with the heavy metal, the free surface of the profiled strip being flush with the adjacent surface (38) of the light metal component (A) or running in parallel with it at a distance from it (Figures 2, 3).

4. An intermediate part for the performance of the method as in Claim 1, characterized in that it exhibits an angular cross-section and at least one of the arms (37) is provided at one face with the material component (B) made as a profiled strip and corresponding with the heavy metal (Figures 4, 5), the connection of the components being produced by way of extrusion.

5. An intermediate part as in Claim 4, characterized in that the one arm (37) of the angle section is provided at its outer face with the profiled strip (B).

6. An intermediate part as in Claim 4 or 5, characterized in that at least one arm of the angle section (P₃) is curved.

## Revendications

1. Procédé pour la fabrication d'une liaison par soudage entre une pièce en métal léger (35) et une pièce en métal lourd (32) en utilisant une pièce intermédiaire (P, P₁, P₂, P₃) comportant une composante (A) de métal correspondant au métal léger qui est reliée par contact métal sur métal, sur le trajet de la presse à filer, avec une composante (B) de matériau correspondant au métal lourd, étant précisé que les surfaces correspondantes de la pièce intermédiaire (P, P₁, P₂, P₃) sont amenées en contact et soudées avec les pièces à relier (32, 35).

2. Pièce intermédiaire pour l'exécution du procédé selon la revendication 1, caractérisée en ce que l'une de ses surfaces présente, à côté de la composante (B) en matériau correspondant au métal lourd, formant une surface d'appui, une surface d'appui pour la pièce en métal léger (35), étant précisé que la liaison des composantes est réalisée sur le trajet de la presse à filer.

3. Pièce intermédiaire selon la revendication 2, caractérisée en ce qu'elle présente une section rectangulaire comportant un feuillard profilé disposé dans un angle de la section et correspondant à la composante (B) en matériau correspondant au métal lourd, étant précisé que la surface libre du feuillard profilé vient affleurer la surface voisine (38) de la composante (A) en métal léger ou court parallèlement et à une certaine distance de celle-ci (figures 2, 3).

4. Pièce intermédiaire pour l'exécution du procédé selon la revendication 1, caractérisée en ce qu'elle présente une section formant un angle ; et en ce qu'au moins l'une des ailes (37) comporte sur une face la composante (B) en matériau correspondant au métal lourd et se présentant sous forme de feuillard profilé (figures 4, 5), étant précisé que la liaison des composantes est réalisée sur le trajet de la presse à filer.

5. Pièce intermédiaire selon la revendication 4, caractérisée en ce que l'une des ailes (37) du profilé formant un angle comporte sur sa surface extérieure le feuillard profilé (B).

6. Pièce intermédiaire selon la revendication 4 ou la revendication 5, caractérisée en ce qu'au moins une aile du profilé formant un angle (P₃) est courbée.

Fig.1

Fig.2

Fig.3

Fig.4

Fig.5